# EUROPÄISCHE PATENTSCHRIFT

(11) **EP 0 889 822 B1**
(45) Veröffentlichungstag und Bekanntmachung des Hinweises auf die Patenterteilung: **29.12.1999**
(21) Anmeldenummer: 97902305.8
(22) Anmeldetag: 03.02.1997
(51) Int. Cl.: B62D 65/00

(54) **VERFAHREN UND VORRICHTUNG ZUR MONTAGE VON RADKÖPFEN OD.DGL.**
PROCESS AND DEVICE FOR FITTING WHEEL HEADS OR THE LIKE
PROCEDE ET DISPOSITIF POUR MONTER DES MOYEUX DE ROUE OU EQUIVALENT

(30) Priorität: 06.03.1996 DE 19608577
(43) Veröffentlichungstag der Anmeldung: 13.01.1999
(73) Patentinhaber: DaimlerChrysler AG, 70567 Stuttgart (DE)
(72) Erfinder: FISCH, Torsten, Birmingham, AL 35244 (US); LAY, Kurt, D-72108 Rottenburg (DE); PFUNDSTEIN, Wolfgang, D-70619 Stuttgart (DE); SCHULTE, Dieter, D-73730 Esslingen (DE)
(74) Vertreter: Patentanwalts-Partnerschaft Rotermund + Pfusch
(86) Internationale Anmeldenummer: EP9700477
(87) Internationale Veröffentlichungsnummer: WO9732773

(56) Entgegenhaltungen:
- GB-A- 2 193 693

## Beschreibung

Die Erfindung betrifft ein Verfahren sowie eine Vorrichtung zur Montage von Radköpfen oder Radträgern an einem Chassis bzw. Teilchassis eines Fahrzeuges, insbesondere bei dessen Herstellung. Unter Chassis bzw. Teilchassis werden hier auch selbsttragende Karosserien oder Teilkarosserien verstanden.

Bei Fahrzeugen mit Einzelradaufhängung werden die die Räder lagernden Radköpfe mit mehr oder weniger aufwendigen Führungsorganen geführt. Dabei handelt es sich beispielsweise um Längs- und/oder Querlenker und/oder Federbeine, die am Radkopf und/oder am Chassis gelenkig bzw. beweglich angebunden sind. Um eine hohe Fahrsicherheit zu gewährleisten, müssen die Führungsorgane so montiert werden, daß die Sollposition der Räder, insbesondere bezüglich Sturz und Nachlauf, möglichst exakt erreicht wird. Hierzu ist bisher ein unerwünscht großer Aufwand notwendig, um zu gewährleisten, daß trotz einer großen Anzahl von miteinander zusammenwirkenden, toleranzbehafteten Teilen die gewünschte Sollage erreicht wird.

Zu diesem Zweck kann vorgesehen sein, die Lager der Führungsorgane höchst exakt zu bearbeiten und für die Führungsorgane selbst sehr enge Toleranzen vorzugeben.

Alternativ kann vorgesehen sein, die Führungsorgane bzw. deren Lager mit Justiervorrichtungen zu versehen, um nach der Montage der Radköpfe und Führungsorgane am Chassis die dann noch notwendige Justierung der Räder bzw. Radköpfe durchführen zu können.

Beide Verfahren sind sehr kostenträchtig.

Aus der DE 36 32 477 C2 ist ein Meß- und Anordnungsverfahren zum Anordnen und Befestigen von Anbauteilen an Kraftfahrzeug-Karosserien bekannt. Außerdem werden entsprechende Vorrichtungen dargestellt. Nach dieser Druckschrift wird die Karosserie einschließlich der Lage der Seitenwandausschnitte bzw. der Kontaktstellen für Anbauteile in einer gesonderten Meßstation vermessen. Danach gelangt die Karosserie in eine Montagestation, in der zunächst die Lage der Karosserie genau bestimmt und dann unter Einsatz von Handhabungsmaschinen die Türen bzw. Anbauteile paßgenau angesetzt werden.

Aufgabe der Erfindung ist es nun, die Montage von Radköpfen bzw. Radträgern und insbesonderen deren Justage bei der Herstellung eines Fahrzeuges zu vereinfachen.

Diese Aufgabe wird erfindungsgemäß dadurch gelöst, daß das Chassis bzw. Teilchassis und der zu montierende Radkopf bzw. Radträger mittels Handhabungsvorrichtung in einer Sollposition relativ zueinander ausgerichtet werden, wobei ein zwischen Radkopf bzw. Radträger und Chassis bzw. Teilchassis fertig montiertes Hauptführungsorgan zur Vorgabe eines Parameters bzw. Parametersatzes der Soliposition verwendet wird, und daß zuvor am Radkopf bzw. Radträger montierte, zur Verbindung zwischen Radkopf bzw. Radträger und Chassis bzw. Teilchassis dienende Führungsorgane zur Ermittlung von chassisseitigen Befestigungspositionen, die der Soliposition zugeordnet sind, dienen und dort befestigt werden.

Die Erfindung beruht auf dem allgemeinen Gedanken, Fertigungstoleranzen in Kauf zu nehmen und dadurch zu kompensieren, daß dafür geeignete Befestigungspositionen unter Verwendung der radseitig bereits montierten Führungsorgane als Montagelehre bzw. Montagehilfe nach genauer Ausrichtung von Radkopf unnd Chassis aufgesucht werden. Im Ergebnis werden dann für jedes Fahrwerk entsprechend dem jeweiligen Toleranzausgleich unterschiedliche Befestigungspositionen der Führungsorgane am Chassis erhalten, und zwar derart, daß in einer vorgegebenen Normallage der Radköpfe relativ zum Chassis die gewünschten Werte von Spur, Sturz und Nachlauf ohne weitere Maßnahmen exakt erreicht werden.

Dabei nutzt die Erfindung die Tatsache, daß die Sollposition von Radkopf und Chassis vor Ermittlung der zugeordneten Befestigungspositionen aufgrund des heutigen Standes der Technik der Handhabungsvorrichtungen höchst exakt und ohne größeren Kostenaufwand eingestellt werden können.

Gemäß einer besonders bevorzugten Ausführungsform der Erfindung erfolgt die Befestigung der Führungsorgane am Chassis an dort vorhandenen Langlöchern, und zwar an den Befestigungspositionen, die in der Sollage von Chassis und Radkopf durch das jeweilige Führungsorgan vorgegeben werden.

Statt dessen ist es auch möglich, am Chassis lediglich einen in der Regel linienförmig schmalen Bereich für Befestigungslöcher bzw. Elemente vorzugeben und mit Hilfe der zu montierenden Führungsorgane innerhalb dieser vorgegebenen Bereiche die der Sollposition von Chassis und Radkopf zugeordnete Befestigungsposition zu ermitteln und dann das Befestigungsloch bzw. Befestigungselement exakt dort anzuordnen.

Im übrigen wird hinsichtlich bevorzugter Merkmale der Erfindung auf die Ansprüche die nachfolgende Erläuterung der Zeichnung verwiesen, anhand der besonders zweckmäßige Ausführungsformen beschrieben werden.

Dabei zeigt
- Fig. 1: eine schematisierte Schnittdarstellung der Handhabungsvorrichtung bei der Montage eines oberen Querlenkers eines Rades am Chassis in Chassislängsrichtung und
- Fig. 2: eine schematisierte Ansicht der Handhabungsvorrichtung entsprechend dem Pfeil II in Fig. 1.

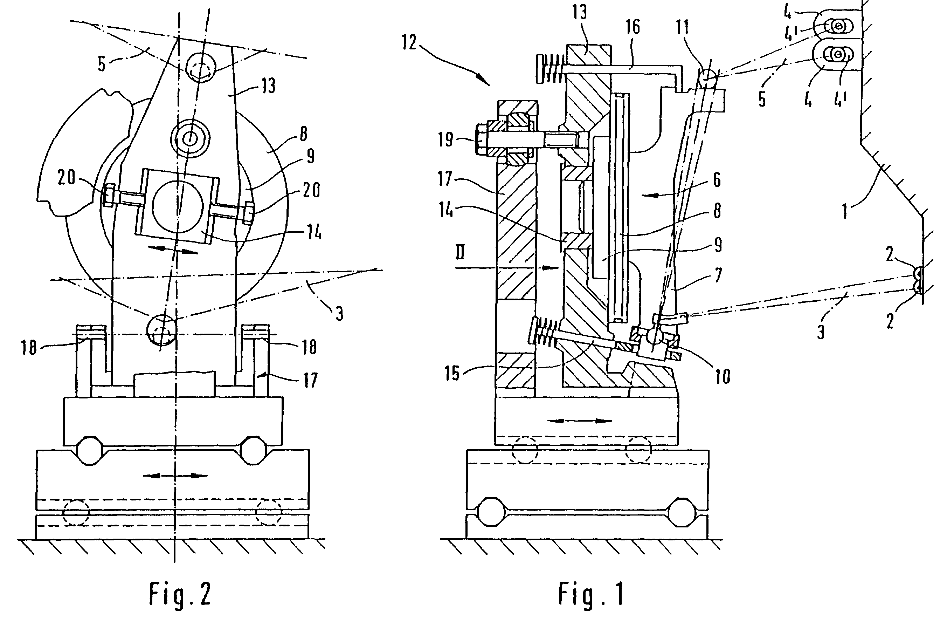

Gemäß den Fig. 1 und 2 sind an einem nur schematisch angedeuteten Chassis 1 vordere und hintere Anschlußpunkte 2 für einen unteren Querlenker 3 sowie vordere und hintere Anschlußpunkte 4 für einen oberen Querlenker 5 angeordnet, so daß sich die Querlenker 3 und 5 in Aufwärts- bzw. Abwärtsrichtung schwenkbar am Chassis anbinden lassen. Die chassisfernen Enden der Querlenker 3 und 5 sind gelenkig mit einem Radkopf 6 verbunden, der im dargestellten Beispiel einen mit den Querlenkern 3 und 5 gelenkig verbundenen Achsschenkel 7, eine Bremsscheibe 8 sowie einen Befestigungsflansch 9 für ein Fahrzeugrad umfaßt.

Bei der Herstellung des Fahrzeuges wird zunächst lediglich der untere Querlenker 3, welcher auch die Kräfte einer nicht dargestellten Feder zwischen Chassis 1 und Rad bzw. Radkopf 6 überträgt, fertig montiert, d.h. der untere Querlenker 3 wird einerseits gelenkig mit dem Chassis 1 an den Anschlußpunkten 2 und andererseits mit dem unteren Kugelgelenk 10 des Achsschenkels 7 verbunden.

Der obere Querlenker 5 wird zunächst lediglich mit dem oberen Kugelgelenk 11 des Achsschenkels 7 gelenkig verbunden.

Bei bzw. nach diesen Montagearbeiten wird der Radkopf 6 mittels einer weiter unten erläuterten Vorrichtung 12 erfaßt und nachfolgend in eine vorgegebene Position relativ zum Chassis 1 gebracht. Nunmehr wird der obere Querlenker 5 an die oberen Anschlußpunkte 4 des Chassis 1 angebunden. Diese Anschlußpunkte 4 sind mit Langlöchern 4' versehen, derart, daß eine Befestigung der Schwenklager des oberen Querlenkers 3 innerhalb eines durch die Langlöcher 4' vorgegebenen Bereiches möglich ist. Da die Vorrichtung 12 den Radkopf 6 in einer Sollposition relativ zum Chassis 1 festhält, kann die Montage der Schwenklager des oberen Querlenkers 3 an den Langlöchern 4' nur in der der vorgenannten Sollposition zugeordneten Position des oberen Querlenkers 5 erfolgen, d.h. in derjenigen Position, in der sämtliche Toleranzen der die Anordnung des Radkopfes 6 bestimmenden Teile optimal kompensiert sind.

Gegebenenfalls können die dem Chassis 1 zugeordneten Gelenke des oberen Querlenkers 5 auch zunächst lose und verschiebbar an die oberen Anschlußpunkte 4 angebunden werden. Wichtig ist, daß die Fixierung der Lage dieser Gelenke an den oberen Anschlußpunkten 4 bzw. den Langlöchern 4' erst dann erfolgt, wenn die Vorrichtung 12 den Radkopf 6 in eine vorgegebene Position relativ zum Chassis 1 gebracht hat.

Die Vorrichtung 12 besitzt eine Radkopfaufnahme 13 mit einer Nabenzentrierung 14, welche mit einem Achs- oder Zentrierzapfen am Flansch 9 des Radkopfes 6 zusammenwirkt. Mittels unterer und oberer Spannorgane 15 und 16 wird einerseits das Gehäuse des unteren radseitigen Kugelgelenkes 10 des unteren Querlenkers 3 und andererseits ein vorgegebenes Teil am Oberteil des Achsschenkels 7 erfaßt, derart, daß der Radkopf 6 unter Einschub seines Zentner- bzw. Achszapfens in die Nabenzentrierung 14 in eine Endlage gebracht und in dieser gehalten wird.

Die Radkopfaufnahme 13 ist an einem Stativ 17 schwenkverstellbar gehaltert. Im dargestellten Beispiel sind Schwenklager 18 so angeordnet, daß sich die Radkopfaufnahme 13 um eine das Zentrum des radseitigen unteren Kugelgelenkes 19 durchsetzende, zur Längsachse des Chassis 1 im wesentlichen parelle Achse kippen läßt, wobei das Maß der Kippung mittels einer Stellschraube 19 einstellbar ist.

Die Nabenzentrierung 14 ist mittels Stellschrauben 20 in einer zur Achse der Schwenklager 18 parallelen Richtung bzw. in einer Richtung mit zur vorgenannten Schwenkachse paralleler Komponente verschiebbar.

Im übrigen ist das Stativ in Längs- und Querrichtung des Chassis 1 verfahrbar. Außerdem kann vorgesehen sein, daß sich das Stativ 17 und/oder die Radkopfaufnahme 13 um eine Vertikalachse schwenken lassen, welche vorzugsweise das Zentrum des unteren Kugelgelenkes 10 durchsetzt.

Durch entsprechende Justage der Stellschraube 19 und die damit verbundene Kippung der Radkopfaufnahme 13 um die Achse der Schwenklager 18 wird der Spreizwinkel des Radkopfes 6 vorgegeben, d.h. der Winkel zwischen einer vertikalen Längsebene des Chassis 1 und einer die Zentren der Kugelgelenke 10 und 11 durchsetzenden Achse.

Durch Verstellung der Stellschrauben 20 wird der Nachlaufwinkel vorgegeben, d.h. der Winkel zwischen der die Zentren der Kugelgelenke 10 und 11 durchsetzenden Achse und einer vertikalen Querebene des Chassis 1.

Durch Schwenkeinstellung der Radkopfaufnahme 13 bzw. der sie tragenden Teile um eine vertikale Hochachse kann gegebenenfalls die Vorspur des Radkopfes 6 eingestellt werden.

## Patentansprüche

1. Verfahren zur Montage von Radköpfen bzw. Radträgern an einem Chassis bzw. Teilchassis eines Fahrzeuges, insbesondere bei dessen Herstellung,
**dadurch gekennzeichnet,**
daß das Chassis (1) bzw. Teilchassis und der zu montierende Radkopf (6) bzw. Radträger mittels Handhabungsvorrichtung (12) in einer Soliposition relativ zueinander ausgerichtet werden, wobei ein zwischen Radkopf bzw. Radträger und Chassis bzw. Teilchassis fertig montiertes Hauptführungsorgan (3) zur Vorgabe eines Parameters bzw. Parametersatzes der Sollposition verwendet wird, und daß zuvor am Radkopf bzw. Radträger montierte, zur Verbindung zwischen Radkopf bzw. Radträger und Chassis bzw. Teilchassis dienende Führungsorgane (5) zur Ermittlung von chassisseitigen Befestigungspositionen, welche der Sollposition zugeordnet sind, dienen und dort befestigt werden.

2. Verfahren nach Anspruch 1,
**dadurch gekennzeichnet,**
daß die Befestigung am Chassis an dort vorhandenen Langlöchern (4') erfolgt.

3. Verfahren nach Anspruch 1,
**dadurch gekennzeichnet,**
daß an den mittels der Führungsorgane (3,5) ermittelten chassisseitigen Befestigungspositionen Befestigungselemente bzw. -löcher zur Anordnung der Führungsorgane (3,5) angeordnet bzw. hergestellt werden.

4. Verfahren nach Anspruch 1,
**dadurch gekennzeichnet,**
daß mit der Handhabungsvorrichtung (12) ein radseitiges Element (Kugelgelenk 10) am Hauptführungsorgan (unterer Querlenker 3) erfaßt wird.

5. Vorrichtung zur Durchführung eines Verfahrens nach einem der Ansprüche 1 bis 4,
**dadurch gekennzeichnet,**
daß der Radkopf (6) an einer ihn halternden Aufnahme (13) der Handhabungsvorrichtung (12) in eine Endlage gespannt ist.

6. Vorrichtung nach Anspruch 5,
**dadurch gekennzeichnet,**
daß die Radkopfaufnahme (13) ein Halteelement (15) zur Positionierung eines nabenfernen Teiles (10) am Radkopf (6) aufweist.

## Claims

1. A method for mounting wheelheads or wheelcarriers on a chassis or part chassis of a vehicle, in particular during the production of the latter, wherein the chassis (1) or part chassis and the wheelhead (6) or wheelcarrier to be mounted are oriented in a desired position relative to one another by means of a handling device (12), a main guide member (3) ready-mounted between the wheelhead or wheelcarrier and the chassis or part chassis being used for predetermining a parameter or set or parameters of the desired position, and wherein guide members (5) mounted previously on the wheelhead or wheelcarrier serving for connection between the wheelhead or wheelcarrier and the chassis or part chassis serve to determine chassis-side fastening positions assigned to the desired position and are fastened there.

2. The method as claimed in claim 1, wherein fastening to the chassis takes place at long holes (4') present there.

3. The method as claimed in claim 1, wherein fastening elements or fastening holes for arranging the guide members (3, 5) are arranged or produced at the chassis-side fastening positions determined by means of the guide members (3, 5).

4. The method as claimed in claim 1, wherein a wheel-side element (ball joint 10) on the main guide member (lower transverse link 3) is grasped by means of the handling device (12).

5. A device for carrying out a method as claimed in one of claims 1 to 4, wherein the wheelhead (6) is clamped into an end position on a receptacle (13) of the handling device (12), said receptacle retaining said wheelhead.

6. The device as claimed in claim 5, wherein the wheelhead receptacle (13) has a holding element (15) for positioning a part (10) on the wheelhead (6), said part being remote from the hub.

## Revendications

1. Procédé de montage de moyeux de roue ou de porte-roue sur un châssis ou un châssis partiel d'un véhicule, en particulier pendant sa fabrication,
caractérisé en ce
qu'on aligne le châssis (1) ou le châssis partiel et le moyeu de roue (6) ou le porte-roue à monter l'un par rapport à l'autre dans une position prescrite au moyen d'un dispositif de manutention (12), avec utilisation d'un organe de guidage principal (3), monté complètement entre le moyeu de roue ou le porte-roue et le châssis ou le châssis partiel, pour préfixer un paramètre ou un jeu de paramètres de la position prescrite, et que des organes de guidage (5), montés préalablement sur le moyeu ou le porte-roue et servant à la liaison entre le moyeu ou le porte-roue et le châssis ou le châssis partiel, servent à déterminer des positions de fixation, côté châssis, coordonnées à la position prescrite et y sont fixés.

2. Procédé selon la revendication 1, caractérisé en ce que la fixation sur le châssis s'effectue à des trous oblongs (4') présents sur lui.

3. Procédé selon la revendication 1, caractérisé en ce que des éléments ou des trous de fixation pour la disposition des organes de guidage (3, 5) sont agencés ou réalisés aux positions de fixation, côté châssis, déterminées au moyen des organes de guidage (3, 5).

4. Procédé selon la revendication 1, caractérisé en ce qu'un élément côté roue (joint à rotule 10) sur l'organe de guidage principal (bras oscillant transversal inférieur 3) est saisi par le dispositif de manutention (12).

5. Dispositif pour la mise en oeuvre d'un procédé selon une des revendications 1 à 4, caractérisé en ce que le moyeu de roue (6) est serré à une position finale dans un logement (13) qui le maintient du dispositif de manutention (12).

6. Dispositif selon la revendication 5, caractérisé en ce que le logement de moyeu (13) présente un élément de maintien (15) pour le positionnement d'une partie (10) éloignée de la zone centrale sur le moyeu de roue (6).
